# EUROPÄISCHE PATENTSCHRIFT

(11) **EP 0 347 547 B1**
(45) Veröffentlichungstag und Bekanntmachung des Hinweises auf die Patenterteilung: **21.07.1993**
(21) Anmeldenummer: 89107008.8
(22) Anmeldetag: 19.04.1989
(51) Int. Cl.: F16J 9/06

(54) **Ovaler Kolbenring**
Oval piston ring
Segment de piston ovale

(30) Priorität: 23.06.1988 DE 3821193
(43) Veröffentlichungstag der Anmeldung: 27.12.1989
(73) Patentinhaber: GOETZE AG, D-51399 Burscheid (DE)
(72) Erfinder: Brillert, Hans-Rainer, Dipl.-Phys., D-5093 Burscheid (DE); Mader, Christian, Dipl.-Ing., D-5093 Burscheid (DE); Mierbach, Albin, Dipl.-Phys., D-5090 Leverkusen 3 (DE)

(56) Entgegenhaltungen:
- DE-C- 100 631
- GB-A- 402 463
- US-A- 3 459 432
- US-A- 4 266 787
- US-A- 4 384 554

## Beschreibung

Die Erfindung betrifft einen Kolbenring für unrunde, insbesondere ovale oder elliptische Kolben, mit einem am Innenumfang radial nach außen spannenden Federelement.

Um die radiale Spannung von ovalen oder elliptischen Kolbenringen zu verstärken, ist es bekannt, am Innenumfang des Kolbenringes eine Feder anzuordnen. Um eine effektive Dichtwirkung zu erzielen, ist eine gleichmäßige Radialspannung über den Kolbenringumfang anzustreben.

Die US-A-4 266 787 offenbart einen ovalen Kolbenring, welcher mittels einer am Innenumfang angeordneten und sich am Kolbennutgrund abstützenden Feder eine radiale Spannung erfährt. Um die Radialspannung über den Umfang zu vergleichmäßigen, ist die Feder konstruktiv so ausgebildet, daß im Bereich des großen Kolbenringdurchmessers eine schwache Federkraft und im Bereich des kleinen Kolbenringdurchmessers eine große Federkraft erzeugt wird. Während des Betriebes unterliegt der Kolben jedoch Schwingungen, insbesondere radialen Verlagerungen. Wenn sich in diesem Fall der Spalt zwischen Kolben und Zylinder im Bereich einer Umfangshälfte vergrößert und im Bereich der anderen Umfangshälfte verkleinert, dann ändert sich auch die Anpreßkraft der Feder, da sich die Feder am Kolbennutgrund abstützt. Auf der Seite, an der sich der Zwischenraum verkleinert, erhöht sich zwangsläufig die Anpreßkraft der Feder, während auf der gegenüberliegenden Seite die Anpreßkraft abnimmt. Dies führt zu dem Nachteil, daß sich im Betrieb keine gleichmäßige Radialspannung am Umfang des Kolbenringes einstellt, wodurch eine effektive Dichtwirkung nicht erwartet werden kann.

Bei kreisrunden Kolbenringen wurde dieser Nachteil dadurch beseitigt, daß man sogenannte selbstspannende Federn, wie beispielsweise Schlauchfedern, verwendet. Selbstspannende Federn sind solche Federn, die sich nicht am Kolbennutgrund abstützen, sondern über ihren eigenen Federringstoß. Der Anpreßdruck von Schlauchfedern ist proportional zur Krümmung der Kolbenringkontur und damit über den Ringumfang konstant.

Elliptische Kolbenringe besitzen im Bereich des kleinen Kolbenringdurchmessers aber nur eine geringe beziehungsweise ovale Kolbenringe in diesen korrespondierenden Umfangsbereichen überhaupt keine Krümmung, so daß eine selbstspannende Feder in diesem Bereich nur eine geringe beziehungsweise keine radiale Spannung auf den Kolbenring ausüben kann.

Der Erfindung liegt die Aufgabe zugrunde, einen gattungsgemäßen Kolbenring dahingehend zu verbessern, daß im Betriebszustand am Ringumfang eine möglichst gleichmäßige Flächenpressung vorliegt, um damit einen partiell erhöhten Verschleiß entgegenzuwirken und die Abdichtwirkung zu verbessern. Diese Aufgabe wird erfindungsgemäß dadurch gelöst, daß das Federelement ein selbstspannendes ist, und daß die vom Federelement beaufschlagte Berührungsfläche des Kolbenringes im Bereich des kleinen Kolbenringdurchmessers eine stärkere und im Bereich des großen Kolbenringdurchmessers eine schwächere Krümmung als der jeweilige Außenumfang des Kolbenringes aufweist. Auf diese Weise ergibt sich eine Innenumfangskontur, der Berührungsfläche, welche der eines runden Kolbenringes zumindest näherkommt, so daß die selbstspannende Feder eine insgesamt über den Umfang gleichmäßigere Radialspannung erzeugen kann.

Einem weiteren Gedanken der Erfindung gemäß ändert sich die Krümmung des Innenumfanges der Berührungsfläche in Umfangsrichtung gegenüber dem Außenumfang des Kolbenringes kontinuierlich. Damit wird eine gleichmäßigere Spannungsverteilung sichergestellt.

Darüber hinaus wird vorgeschlagen, als selbstspannendes Federelement eine Schlauchfeder vorzusehen, die sich bei kreisrunden Kolbenringen bisher bestens bewährt hat.

Um die radiale Wandstärke des Kolbenringes über den Umfang an sich beizubehalten, kann die Feder auch in eine am Innenumfang des Kolbenringes angeordnete Ausnehmung eingelegt werden.

In diesem Fall ändert sich die radiale Tiefe der Ausnehmung kontinuierlich, wobei deren maximale Tiefe im Bereich des kleinen und deren minimale Tiefe im Bereich des großen Kolbenringdurchmessers angeordnet sind.

Die Erfindung ist in der Zeichnung dargestellt und wird im folgenden näher erläutert. Es zeigen:
Figur 1 Halbschnitt eines elliptischen Kolbenringes
Figur 2 vergrößerte Darstellung gemäß II-II mit Feder
Figur 3 vergrößerte Darstellung gemäß III-III mit Feder

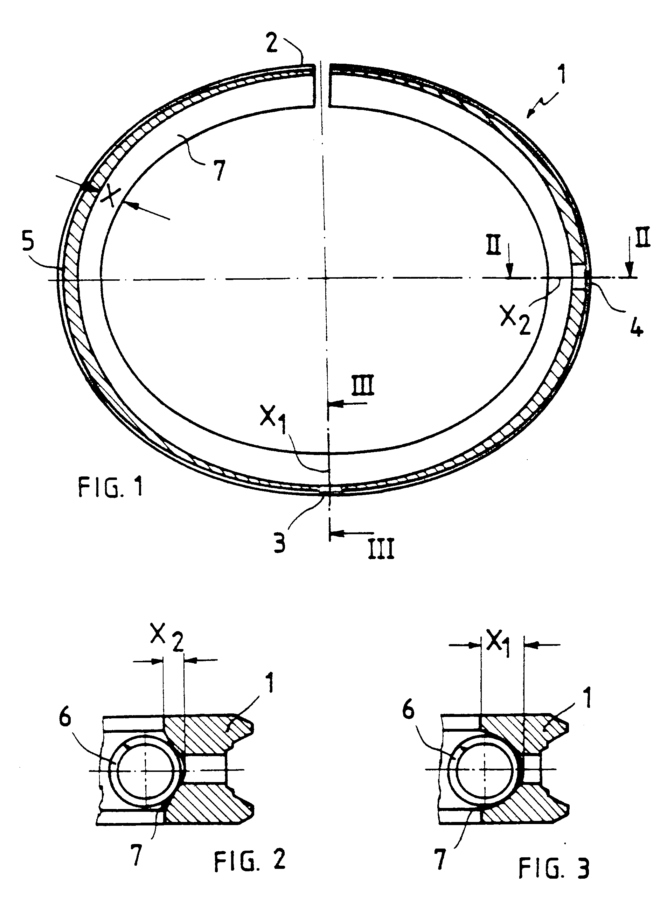

In der Figur 1 ist ein elliptischer Kolbenring 1 im Halbschnitt in der Draufsicht dargestellt. Bedingt durch die elliptische Kontur weist der Kolbenring 1 einen kleinen Durchmesserbereich 2, 3 und einen großen Durchmesserbereich 4, 5 auf. Zur Aufnahme einer Feder 6 (Schlauchfeder) ist eine umlaufende Ausnehmung 7 am Innenumfang des Kolbenringes 1 vorgesehen.

Die radiale Tiefe X der Ausnehmung 7 ändert sich in Umfangsrichtung kontinuierlich, und zwar derart, daß sich im Durchmesserbereich 2, 3 die größte Tiefe X1 und im Durchmesserbereich 4, 5 die kleinste Tiefe X2 ergibt.

In den Figuren 2 und 3 ist jeweils die Lage der Feder 6 in der Ausnehmung 7 dargestellt. Durch die besondere Kontur der Ausnehmung 7 wird die Feder 6 im Bereich 2, 3 stärker gekrümmt als im Bereich 4, 5. Hierdurch wird im Bereich 2, 3 die radiale Pressung der Feder erhöht und im Bereich 4, 5 reduziert, so daß insgesamt die radiale Pressung der Feder und damit auch des Kolbenringes 1 im Zylinder vergleichmäßigt wird.

## Patentansprüche

1. Kolbenring (1) für unrunde, insbesondere ovale oder elliptische Kolben, mit einem am Innenumfang angeordneten radial nach außen spannenden Federelement (6), dadurch gekennzeichnet, daß das Federelement (6) ein selbstspannendes Federelement (6) ist, und daß die vom Federelement beaufschlagte Berührungsfläche des Kolbenringes (1) im Bereich des kleinen Kolbenringdurchmessers (2,3) eine stärkere und im Bereich des großen Kolbenringdurchmessers (4, 5) eine schwächere Krümmung als der jeweilige Außenumfang des Kolbenringes (1) aufweist.

2. Kolbenring (1) nach Anspruch 1, dadurch gekennzeichnet, daß sich die Krümmung der Berührungsfläche in Umfangsrichtung kontinuierlich ändert.

3. Kolbenring (1) nach den Ansprüchen 1 und 2, dadurch gekennzeichnet, daß als radial spannendes Federelement (6) eine Schlauchfeder vorgesehen ist.

4. Kolbenring (1) nach den Ansprüchen 1 bis 3, dadurch gekennzeichnet, daß am Innenumfang des Kolbenringes (1) eine das Federelement (6) aufnehmende Ausnehmung (7) vorgesehen ist.

5. Kolbenring (1) nach Anspruch 4, dadurch gekennzeichnet, daß die radiale Tiefe X der Ausnehmung (7) in Umfangsrichtung sich kontinuierlich ändert, wobei die maximale Tiefe X1 im Bereich des kleinen (2, 3) und die minimale Tiefe X2 im Bereich des großen Kolbenringdurchmessers (4, 5) angeordnet ist.

## Claims

1. Piston ring (1) for non-round, in particular oval or elliptical pistons, with a radially outwardly tensioning spring element (6) arranged at the inner circumference, characterised in that the spring element (6) is a selftensioning spring element (6), and in that the contact surface of the piston ring (1) acted upon by the spring element has a greater curvature in the region of the small piston ring diameter (2, 3) and a smaller curvature in the region of the large piston ring diameter (4, 5), than the respective outer circumference of the piston ring (1).

2. Piston ring (1) according to claim 1, characterised in that the curvature of the inner circumference of the contact surface varies continuously in the circumferential direction.

3. Piston ring (1) according to claims 1 and 2, characterised in that a tube spring is provided as the radially tensioning spring element (6).

4. Piston ring (1) according to claims 1 to 3, characterised in that a recess (7) which receives the spring element (6) is provided at the inner circumference of the piston ring (1).

5. Piston ring (1) according to claim 4, characterised in that the radial depth X of the recess (7) varies continuously in the circumferential direction, wherein the maximum depth X1 is located in the region of the small piston ring diameter (2, 3) and the minimum depth X2 in the region of the large piston ring diameter (4, 5).

## Revendications

1. Segment de piston (1) pour faux-rond, en particulier pour pistons ovales ou elliptiques avec sur la périphérie interne un élément élastique (6) contraint radialement vers l'extérieur, caractérisé en ce que l'élément élastique (6) est un élément élastique (6) auto-contraint, et en ce que la surface de contact du segment (1) de piston sur laquelle repose l'élément élastique présente dans la zone de petit diamètre (2,3) du segment de piston une courbure plus forte et dans la zone de grand diamètre (4,5) du segment de piston une courbure plus faible que la périphérie externe correspondante du segment (1) de piston.

2. Segment (1) de piston selon la revendication 1, caractérisé en ce que la courbure de la surface de contact varie de facon continue dans la direction de la périphérie.

3. Segment (1) de piston selon les revendications 1 et 2, caractérisé en ce qu'un ressort à boudin est prévu en tant qu'élément élastique (6) contraint radialement.

4. Segment (1) de piston selon les revendications 1 à 3, caractérisé en ce qu'il est prévu usr la périphérie interne du segment (1) de piston, une gorge (7) recevant l'élément élastique (6).

5. Segment (1) de piston selon la revendication 4, caractérisé en ce que la profondeur radiale X de la gorge (7) varie de facon continue dans la direction de la périphérie, d'où il s'ensuit que la profondeur maximale X1 se situe dans la zone de petit diamètre (2,3) du segment de piston et que la profondeur minimale X2 se situe dans la zone de grand diamètre (4,5) du segment de piston.
